# EUROPÄISCHE PATENTSCHRIFT

(11) **EP 3 656 347 B1**
(45) Veröffentlichungstag und Bekanntmachung des Hinweises auf die Patenterteilung: **09.11.2022**
(21) Anmeldenummer: 19208553.8
(22) Anmeldetag: 12.11.2019
(51) Int. Cl.: A61C 8/00

(54) **DENTALIMPLANTAT**
DENTAL IMPLANT
IMPLANT DENTAIRE

(30) Priorität: 20.11.2018 DE 102018009128
(43) Veröffentlichungstag der Anmeldung: 27.05.2020
(73) Patentinhaber: Alfa-Gate Mazen Ltd., Kfar Qara 3007500 (IL)
(72) Erfinder: Grobecker-Karl, Tanja, 66424 Homburg (DE)
(74) Vertreter: Dr. Gassner & Partner mbB

(56) Entgegenhaltungen:
- EP-A2- 2 401 982
- WO-A1-2012/059908
- CN-A- 106 725 932
- US-A1- 2012 237 898
- US-A1- 2015 017 605
- US-A1- 2017 215 995
- US-A1- 2017 354 485

## Beschreibung

Die Erfindung betrifft ein Dentalimplantat gemäß dem Oberbegriff des Anspruchs 1.

Ein derartiges Dentalimplantat ist aus der US 2012/0237898 A1 bekannt. Das bekannte Dentalimplantat weist einen zylindrisch ausgebildeten Implantatkörper auf, der über einen gewissen Bereich seiner Gesamtlänge kegelstumpfförmig ausgebildet sein kann, wie insbesondere in seinem Spitzenbereich. Eine derartige kegelstumpfförmige Ausbildung ist jedoch nicht zwingend. Im Rahmen der Erfindung durchgeführte Untersuchungen haben ergeben, dass ein derartiges Dentalimplantat ein höheres Einbringdrehmoment erfordert. Hierbei wird das maximale Drehmoment erreicht, wenn die trapezoidartigen Gewindeteile des Koronalbereiches mit der kortikalen Platte in Eingriff gelangen und den dortigen Knochen komprimieren.

Auch US 2017/215995 A1 offenbart ein Dentalimplantat nach dem Oberbegriff des Anspruchs 1.

Es ist daher Aufgabe der vorliegenden Erfindung, ein Dentalimplantat der im Oberbegriff des Anspruchs 1 angegebenen Art zu schaffen, das eine geringere mechanische Beanspruchung des Kieferknochens (insbesondere Kompression) beim Einsetzen des Implantats im Vergleich zu bekannten Dentalimplantaten ermöglicht.

Die Lösung dieser Aufgabe erfolgt durch die Merkmale des Anspruches 1.

Im Einzelnen wird dementsprechend ein Dentalimplantat geschaffen, dessen Implantatkörper einen Spitzenbereich aufweist, der mit einem scharfkantigen Gewinde versehen ist. Dieses Gewinde umfasst üblicherweise zwei bis drei Gewindegänge.

Ferner weist das erfindungsgemäße Dentalimplantat einen sich an den Spitzenbereich anschließenden Mittelbereich auf, der mit einem trapezoidartigen, also gegenüber dem Gewinde des Spitzenbereichs stumpferen Gewinde versehen ist. Dieser Mittelteil weist üblicherweise vier bis fünf Gewindegänge auf.

Schließlich weist das Dentalimplantat einen sich an den Mittelbereich anschließenden Koronarbereich auf, der wiederum mit einem scharfkantigen Gewinde versehen ist, und ebenfalls zwei bis drei Gewindegänge umfassen kann.

Der Spitzenbereich und der sich an diesen anschließende Mittelbereich und der Koronarbereich erstrecken sich entlang einer Implantatlängsachse und bilden einen einheitlichen Implantatkörper.

Erfindungsgemäß ist ferner vorgesehen, dass der Mittelbereich ausgebaucht ist, was bedeutet, dass er, gesehen aus einer Richtung der Längsmittelachse, eine nach außen gerichtete Ausbauchung aufweist, so dass der Mittelbereich gegenüber dem Spitzenbereich und dem Koronarbereich massiver ausgebildet ist, wobei es möglich ist, die Aussenform des Dentalimplantates konisch oder parallelwandig auszubilden.

Dies ergibt neben einer Verminderung der Beanspruchung des Kieferknochens zunächst den Vorteil, dass weniger Knochenmaterial zum Bilden einer Osteotomie entfernt werden muss, um das Dentalimplantat einsetzen zu können.

Ferner ergibt sich vorteilhafterweise ein höheres Niveau der Primärstabilität bei Implantationen in Extraktionsalveolen aufgrund des kompressiven Gewindedesigns im Mittelteil des erfindungsgemäßen Dentalimplantats.

Ferner ergibt sich der Vorteil, dass das erfindungsgemäße Dentalimplantat die Primärstabilität nicht einbüßt, wenn es erforderlichenfalls um einen gewissen Betrag zurückgedreht werden muss, um eine perfekte dreidimensionale Positionierung zu erreichen.

Die Einsetzdrehmomentkennlinie ist hierbei besonders vorteilhaft und vereinfacht eine perfektionierte Implantatpositionierung in Bezug auf die Insertionstiefe, da das maximale Drehmoment erreicht wird, wenn der Mittelteil des Dentalimplantats die kortikale Platte passiert hat und nicht erst dann, wenn der Koronarbereich mit dem kortikalen Knochen in Eingriff gelangt.

Die Unteransprüche haben vorteilhafte Weiterbildungen der Erfindung zum Inhalt.

Aufgrund der ausgebauchten Ausbildung des Kerndurchmesserbereiches im Mittelteil ist es möglich, den Spitzenbereich und den Koronarbereich im Vergleich zum Mittelbereich verjüngt auszubilden, was bedeutet, dass der Spitzenbereich und der Koronarbereich weniger massiv als der Mittelbereich ausgebildet werden können.

Bei einer weiteren besonders bevorzugten Ausführungsform schließt sich an den Koronarbereich ein Endbereich an, in den über eine Innen- oder Außenverbindung ein Aufbauteil bzw. eine prothetische Suprakonstruktion eingeschraubt werden kann.

Ferner ist es möglich, die Gewindetiefe im Spitzenbereich und im Koronarbereich größer auszubilden als im an den Koronarbereich angrenzenden Bereich des Mittelbereichs.

Schließlich ist das Dentalimplantat gemäß vorliegender Erfindung vorzugsweise als Drehteil ausgebildet, bei dem es auf besonders einfache Art möglich ist, die ineinander übergehenden Gewinde des Spitzenbereichs, des Mittelbereichs und des Koronarbereichs auszubilden.

Weitere Einzelheiten, Vorteile und Merkmale ergeben sich aus nachfolgender Beschreibung eines Ausführungsbeispiels anhand der Zeichnung. Darin zeigt:
- Fig. 1: eine vergrößerte Ansicht auf eine Ausführungsform eines erfindungsgemäßen Dentalimplantats,
- Fig. 2: eine Schnittdarstellung des Dentalimplantats gemäß Figur 1 entlang der Linie A-A in Figur 1,
- Fig. 3: ein Drehmomentdiagramm eines herkömmlichen Dentalimplantats, und
- Fig. 4: ein Drehmomentdiagramm des erfindungsgemäßen Dentalimplantats während der Implantatinsertion.

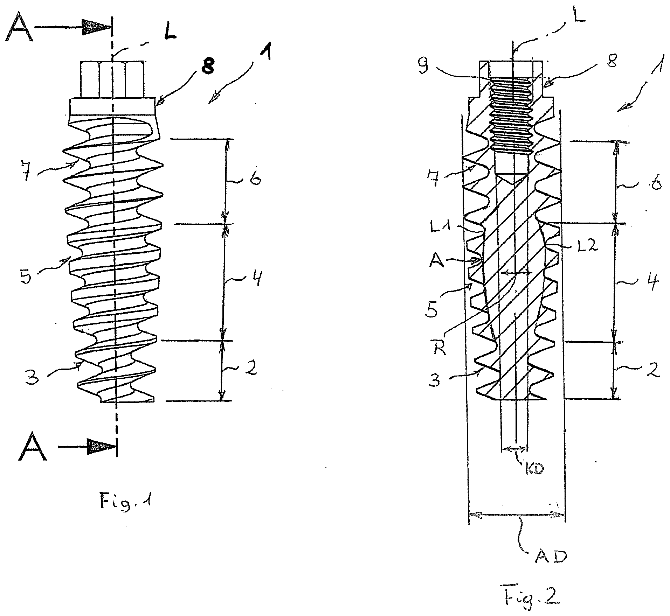

Aus einer Zusammenschau der Figuren 1 und 2 ergibt sich der Aufbau eines erfindungsgemäßen Dentalimplantates 1, das einen Spitzenbereich 2 aufweist, der mit einem scharfkantigen Gewinde 3 versehen ist und der zumindest leicht konisch ausgebildet sein kann.

An den Spitzenbereich 2 schließt sich ein Mittelbereich 4 an, der mit einem trapezoidartigen Gewinde 5 versehen ist, welcher stumpfer ausgebildet ist als das Gewinde 3 des Spitzenbereichs 2.

An den Mittelbereich 4 wiederum schließt sich ein Koronarbereich 6 an, der wiederum mit einem scharfkantigen Gewinde 7 versehen ist, welches mithin scharfkantiger als das Gewinde 5 ist und vorzugsweise genauso scharfkantig ausgebildet ist wie das Gewinde 3.

Die Zusammenschau der Figuren 1 und 2 verdeutlicht hierbei, dass sich der Spitzenbereich 2, der Mittelbereich 4 und der Koronarbereich 6 entlang einer Implantatlängsachse L erstrecken.

Zusätzlich verdeutlicht die Schnittdarstellung der Figur 2, dass der Spitzenbereich 2, der Mittelbereich 4, der Koronarbereich 6 und ein sich an diesen anschließender Endbereich 8, der ein Innengewinde 9 aufweist, ein einstückiges Bauteil bilden.

Ferner zeigt die Schnittdarstellung der Figur 2, dass der Mittelbereich 4 mit einer nach außen gerichteten Ausbauchung A versehen ist. Diese Ausbauchung A ist in Figur 2 durch die Linien L1 und L2 verdeutlicht, die die Fußbereiche des Gewindes 5 miteinander verbinden, wobei sich die Richtung nach außen aus der Darstellung des Doppelpfeiles R ergibt, der von der Implantatlängsachse L ausgeht und dessen Pfeilspitzen nach außen auf die Linien L1 und L2 weisen. Anders ausgedrückt bedeutet dies, dass sich die Ausbuchtung A, die auch als Kerndurchmesserbereich bezeichnet werden kann, dadurch ergibt, dass sich die Linien L1 und L2 relativ zu einem Kerndurchmesser KD des Dentalimplantats 1 nach außen in Richtung auf einen Außendurchmesser AD des Dentalimplantats 1 wölben.

Dementsprechend ist der Spitzenbereich 2 und der Koronarbereich 6 gegenüber dem ausgebauchten Mittelbereich 4 verjüngt ausgebildet, was bedeutet, dass diese Bereiche 2 und 6 weniger massiv sind.

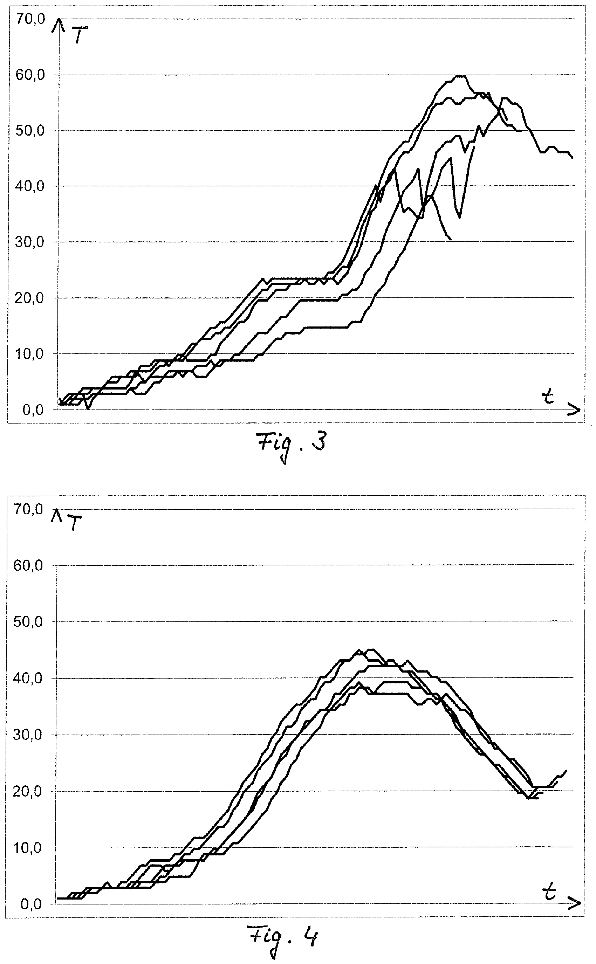

Ein Vergleich der Diagramme gemäß Figur 3 und gemäß Figur 4 verdeutlicht, dass der Drehmomentverlauf des erfindungsgemäßen Dentalimplantats 1, der in Figur 4 dargestellt ist, einen maximalen Drehmomentbereich zeigt, nachdem der Mittelbereich 4 die Kortikalis passiert hat, was zu den eingangs erläuterten besonderen Vorteilen des erfindungsgemäßen Dentalimplantats 1 führt.

Neben der schriftlichen Offenbarung der Erfindung wird zur Ergänzung der Offenbarung explizit auf die zeichnerische Darstellung der Erfindung in den Figuren 1 und 2 Bezug genommen.

### Bezugszeichenliste

- 1: Dentalimplantat
- 2: Spitzenbereich
- 3: scharfkantiges Gewinde
- 4: Mittelbereich
- 5: trapezoidartiges Gewinde
- 6: Koronalbereich
- 7: scharfkantiges Gewinde
- 8: Endbereich
- 9: Innengewinde
- A: Ausbauchung
- L: Implantatlängsachse
- L1, L2: Linien zur Verdeutlichung der Ausbauchung A
- R: Doppelpfeil ausgehend von der Implantatlängsachse L
- AD: Außendurchmesser
- KD: Kerndurchmesser

## Patentansprüche

1. Dentalimplantat (1)
• mit einem Spitzenbereich (2), der mit einem scharfkantigen Gewinde (3) versehen ist,
• mit einem sich an den Spitzenbereich (2) anschließenden Mittelbereich (4), der mit einem trapezoidartigen Gewinde (5) versehen ist; und
• mit einem sich an den Mittelbereich (4) anschließenden Koronalbereich (6), der mit einem scharfkantigen Gewinde (7) versehen ist,
• wobei sich der Spitzenbereich (2), der Mittelbereich (4) und der Koronalbereich (6) entlang einer Implantatlängsachse (L) erstrecken, **dadurch gekennzeichnet,**
• **dass** eine sämtliche Gewindegründe der genannten Gewinde miteinander verbindende Linie nur im Mittelbereich (4) relativ zur Implantatlängsachse (L) nach außen gewölbt verläuft, so dass nur der Mittelbereich (4), gesehen aus einer Richtung (R) ausgehend von der Implantatlängsachse (L), mit einer nach außen gerichteten Ausbauchung (A) versehen ist und der Mittelbereich gegenüber dem Spitzenbereich und dem Koronalbereich massiver ausgebildet ist, wobei eine jede Gewindetiefe im Spitzenbereich (2) und im Koronalbereich (6) jeweils größer als eine jede Gewindetiefe im Mittelbereich (4) ausgebildet ist.

2. Dentalimplantat nach Anspruch 1, **dadurch gekennzeichnet, dass** eine Außenform des Dentalimplantates parallelwandig ausgebildet ist.

3. Dentalimplantat nach Anspruch 1, **dadurch gekennzeichnet, dass** eine Außenform des Dentalimplantates konisch ausgebildet ist.

4. Dentalimplantat nach einem der vorhergehenden Ansprüche, **dadurch gekennzeichnet, dass** der Spitzenbereich (2) und der Koronalbereich (6) im Vergleich zum ausgebauchten Mittelbereich (4) verjüngt ausgebildet sind.

5. Dentalimplantat nach einem der vorhergehenden Ansprüche, **dadurch gekennzeichnet, dass** sich an den Koronalbereich (6) ein Endbereich (8) anschließt.

6. Dentalimplantat nach Anspruch 5, **dadurch gekennzeichnet, dass** der Endbereich (8) mit einer Außen- oder Innenverbindung und einem Innengewinde (9) versehen ist.

7. Verfahren zur Herstellung eines Dentalimplantats (1) nach einem der Ansprüche
1 bis 6, **dadurch gekennzeichnet, dass** die Herstellung des Dentalimplantats (1)
eine Bearbeitung durch Drehen umfasst.

## Claims

1. Dental implant (1)
• with a tip area (2) provided with a sharp-edged thread (3),
• with a middle area (4) adjoining the tip area (2) and provided with a trapezoidal thread (5); and
• with a coronal area (6) adjoining the middle area (4) and provided with a sharp-edged thread (7),
• wherein the tip area (2), the middle area (4) and the coronal area (6) extend along a longitudinal axis (L) of the implant, **characterized in**
• **that** a line connecting all the thread bases of the said threads to one another runs curved outward only in the middle area (4) relative to the longitudinal axis (L) of the implant, so that only the middle area (4), as seen from a direction (R) starting from the longitudinal axis (L) of the implant, is provided with an outwardly directed bulge (A) and the middle area is more massive than the tip area and the coronal area, wherein each thread depth in the tip area (2) and in the coronal area (6) is in each case greater than each thread depth in the middle area (4).

2. Dental implant according to claim 1, **characterized in that** an outer shape of the dental implant is parallel-walled.

3. Dental implant according to claim 1, **characterized in that** an outer shape of the dental implant is conical.

4. Dental implant according to any one of the preceding claims, **characterized in that** the tip area (2) and the coronal area (6) are tapered in comparison to the bulged-out middle area (4).

5. Dental implant according to any one of the preceding claims, **characterized in that** an end area (8) adjoins the coronal area (6).

6. Dental implant according to claim 5, **characterized in that** the end area (8) is provided with an external or internal connection and an internal thread (9).

7. A method of manufacturing of a dental implant (1) according to any one of claims 1 to 6, **characterized in that** the manufacturing of the dental implant (1) comprises machining by turning.

## Revendications

1. Implant dentaire (1)
• avec une région de pointe (2) qui est pourvue d'un filetage à arêtes vives (3),
• avec une région médiane (4) se raccordant à la région de pointe (2) qui est pourvue d'un filetage trapézoïdal (5) ; et
• avec une région coronaire (6) se raccordant à la région médiane (4) qui est pourvue d'un filetage à arêtes vives (7),
• dans lequel la région de pointe (2), la région médiane (4) et la région coronaire (6) s'étendent le long d'un axe longitudinal d'implant (L), **caractérisé en ce**
• **qu'**une ligne connectant toutes des bases des filetages cités l'une à l'autre ne s'étend de manière bombée vers l'extérieur que dans la région médiane (4) par rapport à l'axe longitudinal d'implant (L) de sorte que seule la région médiane (4), vue depuis une direction (R) partant de l'axe longitudinal d'implant (L), est pourvue d'un évasement (A) orienté vers l'extérieur et la région médiane est réalisée de manière plus massive que la région de pointe et la région coronaire, dans lequel chaque profondeur de filetage dans la région de pointe (2) et dans la région coronaire (6) est à chaque fois réalisée pour être supérieure à chaque profondeur de filetage dans la région médiane (4).

2. Implant dentaire selon la revendication 1, **caractérisé en ce qu'**une forme externe de l'implant dentaire est réalisée à parois parallèles.

3. Implant dentaire selon la revendication 1, **caractérisé en ce qu'**une forme externe de l'implant dentaire est réalisée de manière conique.

4. Implant dentaire selon une des revendications précédentes, **caractérisé en ce que** la région de pointe (2) et la région coronaire (6) sont réalisées de manière rétrécie par comparaison à la région médiane évasée (4).

5. Implant dentaire selon une des revendications précédentes, **caractérisé en ce qu'**une région d'extrémité (8) se raccorde à la région coronaire (6).

6. Implant dentaire selon la revendication 5, **caractérisé en ce que** la région d'extrémité (8) est pourvue d'une connexion externe ou interne et d'un filetage interne (9).

7. Procédé de fabrication d'un implant dentaire (1) selon une des revendications 1 à 6, **caractérisé en ce que** la fabrication de l'implant dentaire (1) comprend un usinage par rotation.
